# FASCICULE DE BREVET EUROPEEN

(11) **EP 1 281 217 B1**
(45) Date de publication et mention de la délivrance du brevet: **22.09.2004**
(21) Numéro de dépôt: 01929772.0
(22) Date de dépôt: 02.05.2001
(51) Int. Cl.: H01R 35/02, B60R 16/02

(54) **CONTACTEUR ELECTRIQUE TOURNANT**
ELEKTRISCHER DREHKONTAKTOR
ROTARY ELECTRIC CONTACTOR

(30) Priorité: 03.05.2000 FR 0005622
(43) Date de publication de la demande: 05.02.2003
(73) Titulaire: VALEO ELECTRONIQUE, 94000 Creteil (FR)
(72) Inventeur: MANGE, Jean-Christophe, F-94410 Saint-Maurice (FR)
(74) Mandataire: Remy, Vincent Noel Paul
(86) Numéro de dépôt international: PCT/FR2001/001340
(87) Numéro de publication internationale: WO 2001/084677

(56) Documents cités:
- EP-A- 0 629 026
- EP-A- 0 675 576
- US-A- 5 980 285

## Description

La présente invention concerne un contacteur électrique tournant comprenant un conducteur-ruban.

Les contacteurs tournants sont des dispositifs permettant de relier électriquement des pièces pivotant les unes par rapport aux autres.

On les utilise en particulier dans les colonnes de direction des véhicules automobiles, pour relier des organes électriques montés sur le volant à des appareillages fixés sur le véhicule.

Dans ce type de dispositif, le conducteur-ruban est enfermé dans un boîtier qui est délimité notamment par deux plaques parallèles contre lesquelles les chants supérieur et inférieur du conducteur-ruban prennent appui.

L'une des extrémités du conducteur-ruban est fixée à un stator qui se trouve en général à la périphérie du contacteur. L'autre extrémité du conducteur-ruban est reliée à un rotor, logé le plus souvent à l'intérieur du stator.

Dans les contacteurs tournants connus, on a déjà constaté le défaut consistant en ce que le conducteur-ruban vibre et/ou frotte contre les plaques parallèles entre lesquelles il est maintenu, ce qui engendre des bruits indésirables.

Différentes solutions ont déjà été proposées pour essayer de résoudre ce problème. L'une d'elles consiste à revêtir les faces des plaques parallèles dirigées vers le conducteur-ruban de complexes constitués de mousse et d'un film glissant qui remplissent la double fonction d'amortir les vibrations du ruban et d'éviter la friction de ses chants avec les plaques.

Cependant, cette solution s'avère relativement coûteuse et ne donne pas entière satisfaction, notamment en ce qui concerne les vibrations.

Une autre solution connue consiste à remplacer les complexes par des feuilles de feutrine, ce qui améliore en particulier l'amortissement des vibrations, mais cette solution présente l'inconvénient que la feutrine finit par pelucher. Un tel contacteur électrique tournant est mentionné, par exemple, dans le document EP-A-0 675 576.

La présente invention vise à fournir une solution efficace et économique à ces problèmes.

La présente invention a pour objet un contacteur électrique tournant comprenant un conducteur-ruban maintenu par un de ses chants contre au moins une plaque revêtue d'un matériau isolant sur sa face dirigée vers ledit conducteur-ruban, caractérisé en ce que le matériau isolant est une mousse et en ce que le chant du conducteur-ruban est arrondi et s'applique directement contre cette mousse.

Grâce à l'invention, il n'est plus nécessaire de prévoir, sur la ou les plaques du contacteur, un complexe mousse - film qui grève considérablement le prix de revient d'un contacteur électrique tournant traditionnel ou une feuille de feutrine qui est susceptible de se dégrader.

En effet, grâce à la forme arrondie de ses chants, le conducteur-ruban peut être mis en contact direct avec un revêtement en mousse recouvrant les plaques du contacteur.

En outre, par la suppression du film glissant recouvrant la mousse des contacteurs de l'état de la technique, on améliore l'efficacité de la mousse comme amortisseur de vibrations.

Dans un mode de réalisation particulier de l'invention, la mousse se présente sous la forme d'une feuille non adhésive intercalée entre le conducteur-ruban et la plaque. Son faible poids autorise en effet de la laisser libre entre le chant du conducteur et la face de la plaque dirigée vers le conducteur.

En cas de nécessité, la feuille de mousse peut aussi être collée à la plaque. Pour réaliser le chant arrondi du conducteur-ruban, différentes techniques peuvent être utilisées.

L'une d'elles consiste à enfermer des bandes conductrices dans une feuille en matière plastique rabattue sur elle-même et formant un bord arrondi au niveau de chaque chant du conducteur-ruban.

Une autre technique, particulièrement avantageuse dans le cadre de la présente invention, est l'extrusion, technique par laquelle les bandes conductrices sont directement enrobées de matière plastique extrudée. Une telle technique est décrite dans EP-A-0 675 576.

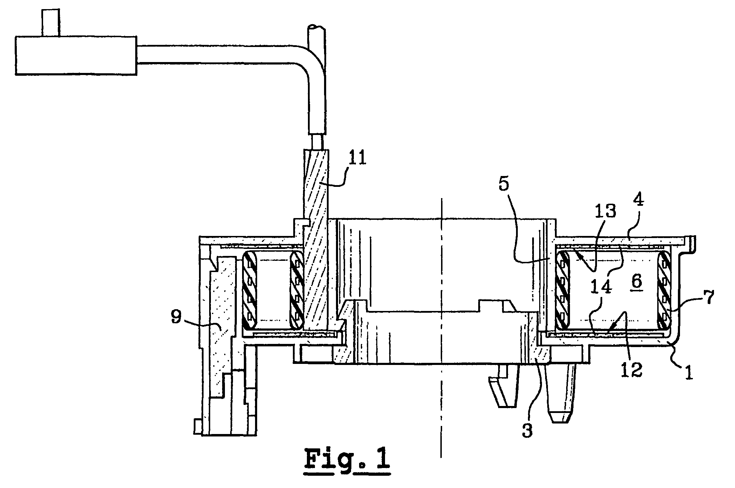

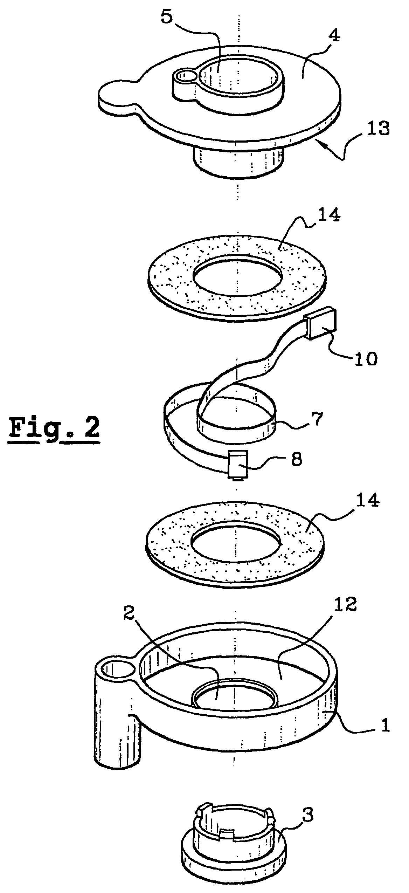

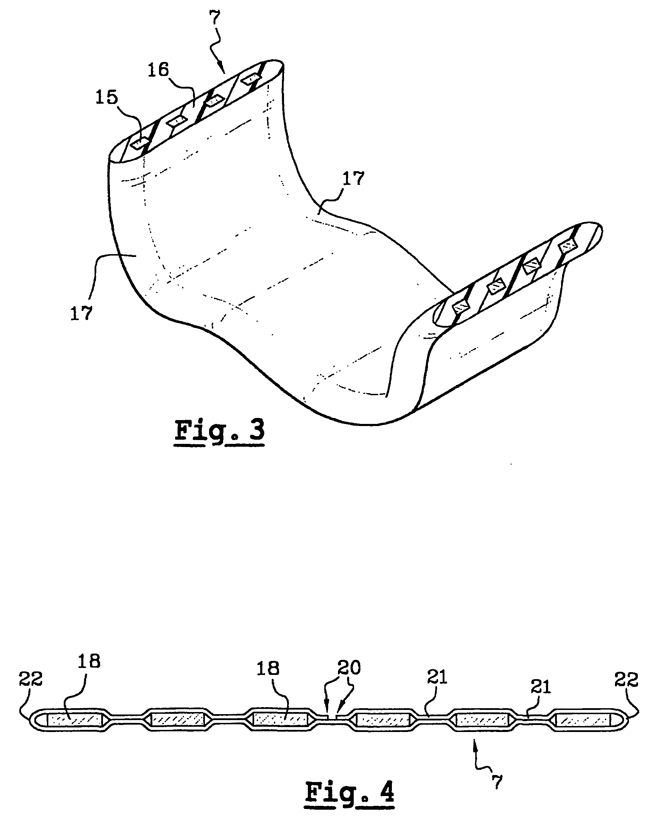

Afin de mieux faire comprendre l'invention, on va en décrire maintenant des modes de réalisation donnés à titre d'exemples non limitatifs, en référence au dessin annexé qui comprend :
- une figure 1 représentant une vue en coupe axiale d'un contacteur électrique selon un mode de réalisation de l'invention,
- une figure 2 représentant une vue en perspective éclatée du contacteur de la figure 1,
- une figure 3 représentant à plus grande échelle une coupe transversale du conducteur-ruban,
- une figure 4 représentant une section transversale d'un autre conducteur-ruban.

Le contacteur représenté sur le dessin comprend, de façon connue, un boîtier 1 en forme de coupelle, percé en son milieu par un orifice 2 dans lequel vient se loger un moyeu inférieur 3.

Le contacteur comprend également un couvercle 4 qui est formé d'un seul tenant avec un moyeu supérieur 5 s'étendant sur toute la hauteur du boîtier.

Le couvercle 4 s'emboîte dans le boîtier 1, à l'intérieur duquel il est retenu par encliquetage avec le moyeu inférieur 3.

Cet encliquetage assure la rétention axiale du couvercle mais laisse ce dernier libre de pivoter à l'intérieur du boîtier, en accompagnant un arbre tournant, comme par exemple un arbre d'une colonne de direction supportant un volant.

Lorsque le boîtier 1 et le couvercle 4 sont réunis, ils délimitent entre eux une cage annulaire 6 apte à contenir un conducteur-ruban 7 enroulé sur lui-même.

L'extrémité extérieure 8 du conducteur-ruban est fixée à une borne 9 solidaire du boîtier. L'extrémité intérieure 10 du conducteur-ruban est fixée à une borne 11 solidaire du couvercle 4.

Le fond 12 du boîtier et la face interne 13 du couvercle constituent des plaques parallèles entre lesquelles le conducteur-ruban 7 est maintenu, à l'intérieur de la cage annulaire 6.

Le fond 12 du boîtier et la face interne 13 du couvercle sont revêtues d'une feuille de mousse 14 de polyuréthane, de polyéthylène ou de polypropylène.

Chaque feuille de mousse 14 est laissée libre dans la cage 6. Le conducteur-ruban 7 la maintient au voisinage de la plaque 12, 13 correspondante.

Comme on le voit mieux sur les figures 3 et 4, les chants du conducteur-ruban dirigés, l'un vers le couvercle, l'autre vers le fond du boîtier sont arrondis dans le sens où ils ne comportent aucune arête vive.

Ces chants arrondis sont directement mis au contact de la couche de mousse sans que cette dernière ne soit revêtue d'aucune protection ni d'aucun film glissant.

La forme arrondie du chant suffit à empêcher l'altération de la mousse ou le blocage du conducteur-ruban.

A la figure 3, on a représenté une forme de réalisation possible d'un conducteur-ruban à chants arrondis utilisable selon l'invention.

Ce conducteur-ruban comprend quatre bandes conductrices 15, par exemple en cuivre, surmoulées dans une masse 16 de polyester issue d'extrusion. Les chants 17 de la masse sont arrondis par un choix approprié de la tête d'extrusion.

A la figure 4, on a représenté une autre forme de réalisation du conducteur-ruban.

Ce conducteur-ruban comprend six bandes conductrices 18 qui ont été déposées sur une feuille de polyester disposée à plat.

La feuille de polyester a été rabattue sur elle-même de part et d'autre des bandes conductrices pour les enfermer complètement, les extrémités 20 de la feuille se rejoignant sensiblement au milieu du ruban.

La feuille ainsi préparée a été soumise à un pressage à chaud, ce qui a formé des ponts 21 entre les bandes conductrices, réalisant ainsi l'isolation et le positionnement définitif de celles-ci.

Les chants 22 du ruban ainsi obtenu sont arrondis, c'est-à-dire qu'ils ne présentent aucune arête vive.

Les modes de réalisation ci-dessus ne sont que des exemples fournis pour bien faire comprendre l'invention.

## Revendications

1. Contacteur électrique tournant comprenant un conducteur-ruban (7) maintenu par un de ses chants (17, 22) contre au moins une plaque (12, 13) revêtue d'un matériau isolant sur sa face dirigée vers ledit conducteur-ruban, **caractérisé en ce que** le matériau isolant est une mousse (14) et **en ce que** le chant (17, 22) du conducteur-ruban est arrondi et s'applique directement contre cette mousse (14).

2. Contacteur selon la revendication 1, **caractérisé en ce que** la mousse se présente sous la forme d'une feuille (14) non adhésive intercalée entre le conducteur-ruban (7) et la plaque (12, 13).

3. Contacteur selon l'une quelconque des revendications 1 et 2, **caractérisé en ce que** le conducteur-ruban comprend une masse (16) de matière plastique extrudée autour de bandes conductrices (15).

4. Contacteur selon l'une quelconque des revendications 1 et 2, **caractérisé en ce que** le conducteur-ruban est constitué par des bandes conductrices (15) déposées sur une feuille de matière plastique rabattue sur elle-même en emprisonnant les bandes.

## Patentansprüche

1. Elektrischer Drehschalter, umfassend einen Bandleiter (7), gehalten durch eine seiner Kanten (17, 22) gegen mindestens eine Platte (12, 13), versehen mit einem isolierenden Material auf der zu dem Bandleiter gerichteten Seite, **dadurch gekennzeichnet, dass** es sich bei dem isolierenden Material um einen Schaum (14) handelt, und dass die Kante (17, 22) des Bandleiters gerundet ist und direkt an diesem Schaum (14) anliegt.

2. Schalter nach Anspruch 1, **dadurch gekennzeichnet, dass** der Schaum in Form eines nicht haftenden Blatts (14), das zwischen den Bandleiter (7) und die Platte (12, 13) geschoben ist, vorliegt.

3. Schalter nach einem der Ansprüche 1 und 2, **dadurch gekennzeichnet, dass** der Bandleiter einer Masse (16) aus einem extrudierten Kunststoffmaterial umfasst, die leitfähige Bänder (15) umgibt.

4. Schalter nach einem der Ansprüche 1 und 2, **dadurch gekennzeichnet, dass** der Bandleiter aus leitfähigen Bändern (15) besteht, die auf einer Kunststofffolie angebracht sind, die um sich selbst umgebogen ist, um die Bänder zu umschließen.

## Claims

1. A rotary electric contactor having a conductor-ribbon (7) held via one of its edge faces (17, 22) against one plate (12, 13) coated in an insulating material on its face facing towards said conductor-ribbon, the contactor being **characterized in that** the insulating material is a foam (14) and **in that** the edge face (17, 22) of the conductor-ribbon is rounded and bears directly against the foam (14).

2. A contactor according to claim 1, **characterized in that** the foam is in the form of a non-adhesive sheet (14) interposed between the conductor-ribbon (7) and the plate (12, 13).

3. A contactor according to claim 1 or claim 2,
**characterized in that** the conductor-ribbon comprises a mass (16) of extruded plastics material around conductive strips (15).

4. A contactor according to claim 1 or claim 2,
**characterized in that** the conductor-ribbon is constituted by conductive strips (15) placed on a sheet of plastics material which is folded over so as to hold the strips captive.
